# EUROPEAN PATENT SPECIFICATION

(11) **EP 4 514 680 B1**
(45) Date of publication and mention of the grant of the patent: **07.10.2026**
(21) Application number: 23726150.8
(22) Date of filing: 19.04.2023
(51) Int. Cl.: B64B 1/02, B64B 1/06, B64B 1/14, B64B 1/58, B64B 1/62

(54) **HIGH-ALTITUDE AEROSTAT WITH A LARGE SURFACE AREA**
AEROSTAT IN GROSSER HÖHE MIT GROSSER OBERFLÄCHE
AÉROSTAT DE HAUTE ALTITUDE À GRANDE SUPERFICIE

(30) Priority: 24.04.2022 GB 202205945; 14.04.2023 GB 202305479
(43) Date of publication of application: 05.03.2025
(73) Proprietor: MORREY, Martin, North Berwick East Lothian EH39 5NA (GB)
(72) Inventor: MORREY, Martin, North Berwick East Lothian EH39 5NA (GB)
(74) Representative: Ellis IP Ltd
(86) International application number: PCT/GB2023/000022
(87) International publication number: WO 2023/209319

(56) References cited:
- CN-A- 103 303 457
- CN-A- 110 979 625
- US-A1- 2008 030 884
- US-A1- 2018 050 784
- US-A1- 2020 096 731
- US-B1- 6 860 449

## Description

### Technical Field

The present invention is directed to a variable-volume aerostat, which can increase its horizontal area by a factor of up-to approximately 100, when it ascends to high altitude. It delivers an active layer of large area to high altitudes, which is valuable in applications which interact with direct sunlight, such as targeted solar-geoengineering, also known as Solar Radiation Management (SRM), airborne solar electricity generation, and climate adaptation.

### Background Art

Lighter-than-air craft such as balloons or airships, collectively known as aerostats, are well suited to aerial applications which require long-duration flight and minimum energy expenditure.

Airships can be of non-rigid, semi-rigid or rigid types. Non-rigid airships, also known as "blimps", are gas envelopes which take on the shape of an airship when inflated to positive pressure. Semi-rigid airships have some rigid structure, but their overall shape still depends on positive pressure in the gas envelope. Rigid airships have a rigid frame supporting a skin of fixed shape, containing one or more gas envelopes. Rigid airships are typically heavier, but more robust and less prone to gas leakage.

The most suitable atmospheric environment for long-duration aerostats is the lower stratosphere (NPL2). In the stratosphere, the air is relatively stable most of the time, and a given wind or wind shear exerts a lower force, because the air is less dense.

For an aerostat to maintain its lifting capacity as it ascends, its envelope must continue to displace the same total mass of air. Following Boyle's Law, at constant temperature, the volume of lifting gas must increase in inverse proportion to the decrease in pressure with altitude.

In most existing high-altitude aerostats, the gas envelopes are partially filled with lifting gas at ground level. As the aerostat ascends, the lifting gas expands, increasing the volume of the gas envelope, which displaces a greater volume of air.

Most contemporary designs for high-altitude airships are of the semi-rigid type (NPL2), but modern materials and techniques offer the potential for a lightweight rigid airship which can reach stratospheric attitudes. By way of example but not limitation, the rigid frame can be formed by inflated tubes (PTL3); or a hybrid of circumferential inflatable rings and a longitudinal carbon fibre skeleton (NPL3); or a core shaft truss with stiffening rings (PTL12)

Rigid airships sometimes include internal structures such as "ballonets" (PTL5), which are used to control buoyancy by actively changing the total volume of lifting gas. Transformable airships (PTL6, PTL11 ) are airships which can reconfigure their internal structure to change volume and surface area to a limited degree, e.g. "6-8 times" (PTL6).

Certain aerial applications require a large surface area. Airborne solar-power generation (PTL1 ,PTL7,PLT10) requires a large area of photovoltaic cells at high attitudes. Some existing designs (PTL1 ) require complex structures that must be unfolded at ground level, and deployed at a fixed location. Others (PLT10) require a separate reflector suspended by the force of any prevailing wind.

Some forms of Solar Radiation Management (SRM) require a large area of reflective surface, in order to direct incident solar radiation back into space. In existing designs for airborne SRM (PTL2), a non-buoyant reflective sheet is supported by one or more concentric inflated rings, and additional support balloons.

Long-duration airships require solutions for minimising or repairing leaks in the gas envelopes, such as a durable hull [PTL8] or autonomous repair systems [PTL9]
CN-A-103303457 describes a soft and hard hybrid airship where an external airbag is used to provide a required level of buoyancy to the airship. US-A-2018/050784 describes an artificial cloud which includes horizontal extending panels in the form of gas-filled, flattened, large balloons that may be elevated by balloons or connected to fixed structures and may be used to capture and convert solar energy to electricity.

### Summary of Invention

The invention provides a variable-volume aerostat as defined in claim 1. Embodiments thereof are defined in the dependent claims.

### Technical Problem

Solar Radiation Management applications require a very large surface area of material which reflects solar radiation, and which remains in situ over long time scales. A large non-buoyant surface (PTL2) would tend to hang downwards.

Airborne solar power generation requires exposure of a large surface area of photovoltaic cells, for long time-scales, to be economically viable.

Supporting these applications using a lighter-than-air platform, requires maximising the useful surface area delivered by an aerostat of a given volume, and delivering this surface to a sufficiently stable part of the atmosphere.

The lowest risk environment for long duration applications is in the lower stratosphere, which starts at altitudes above approximately 10 km at high latitudes to approximately 20 km in the tropics (NPL2).

Existing designs of stratospheric aerostats (NPL2), would only be able to deliver a relatively-small area of non-buoyant surface to high altitude, because their lifting capacity is small.

Shorter duration or periodic applications may sometimes be practical at low altitudes, but the risk of damage from atmospheric disturbance must be managed.

On its own, a flat gas envelope partially-filled with lifting gas at ground level, would be extremely cumbersome, vulnerable, difficult to deploy and operate, and difficult to retrieve.

The challenge in both applications is delivering a lighter-than-air platform which exposes the maximum surface area in its deployed configuration at high altitude, whilst having a stowed configuration which is subject to practical handling at ground level.

### Solution to Problem

The solution is a hybrid aerostat system, of variable volume, which is compact at ground level, but can expand its surface area to the maximum possible, as it ascends to high altitude.

The essential features of the invention are defined in claim 1.

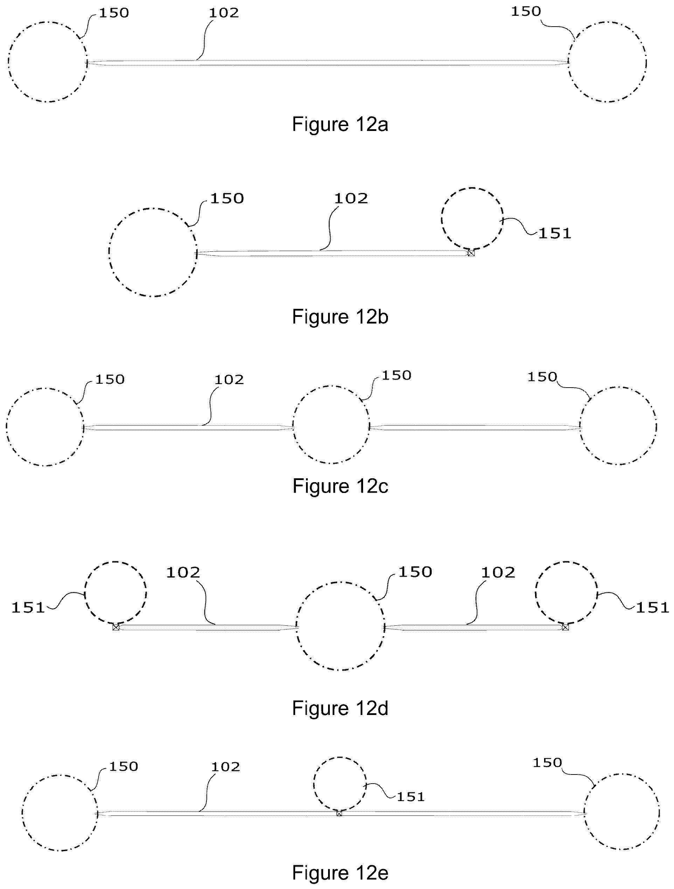

As shown in figure 12, The internally-connected aerostat bodies can be at one end of the flat envelope, a mono-connection layout; both ends of the flat envelope, a dual-connection layout; or in the middle of the flat envelope, a central-connection layout.

The maximum width of the flat gas envelope (102) is primarily constrained by the mass-per-unit-area of the uninflated flat gas envelope, and the net lifting capacity of the internally-connected aerostat bodies (104) at ground level.

Given a flat envelope of areal density *σ*, and a lifting gas of buoyancy *b₀* at take off, and connected aerostats of total internal volume *Vₐ* and total dead mass *mₐ,* the maximum area of the flat envelope, A, is given by the following equation: $A = \left(\frac{1}{σ}\right) \left(\frac{{V}_{a} {b}_{0}}{g}-{m}_{a}\right)$ (1)

Given atmospheric pressure and temperature at take-off of *P_{S}* and *T_{S},* and temperature at ceiling altitude of *T_{C},* the pressure at the ceiling altitude, *P_{C}* is given by the following equation: ${P}_{C} = {P}_{S} \left(\frac{{T}_{C}}{{T}_{S}}\right) \left(\frac{{m}_{a} g}{{V}_{a} {b}_{0}}\right)$ (2)

The depth of the flat envelope *d* at pressure P and temperature *T,* is given by the following equation: $d = \frac{σg}{{b}_{0}} \frac{{P}_{S} T}{{PT}_{S}}$ (3)

The preferred features of the invention are as follows.

To prevent tearing, the flat gas envelope is typically reinforced with strong and lightweight ribbons or cables (115).

The flat gas envelope may be divided into separate sections, and may incorporate lightweight pipes (122,126) along its width to expedite the flow of lifting gas. These lightweight pipes can also act as the reinforcing structure, if made of a strong material. The pipes can include active or passive valves to control the flow of lifting gas.

In the deployed configuration, the flat gas envelope (102) can be kept in slight tension by thrusters (114) on the aerostat bodies (104,132,136), requiring a relatively small amount of power. End tethers (111) can also sometimes provide this tension.

If required, length of the depth constraining structures (101) can be varied to create other shapes and attitudes. An uneven spacing of the depth constraining structures can help suppress standing waves in the flat gas envelope.

The invention can be autonomous or tethered by lightweight tethers (111). There is a spectrum of possible autonomy, from systems physically controlled by end-tethers, through remote-controlled systems, to fully autonomous robotic systems.

Precise control is required over the aerostat bodies (104,132,136), to avoid overstressing the flat gas envelope, and to avoid collision between aerostat bodies. In dual systems, telescopic booms extending inwards from each aerostat body, can also be used to manage separation during take-off and landing.

Autonomous examples include the energy storage (112), propulsion (114) and control systems necessary to control position, rotation, envelope tension, altitude, attitude and speed. Energy storage capacity is not always sufficient to travel at night, but must be sufficient to control orientation, and maintain slight tension in the envelope.

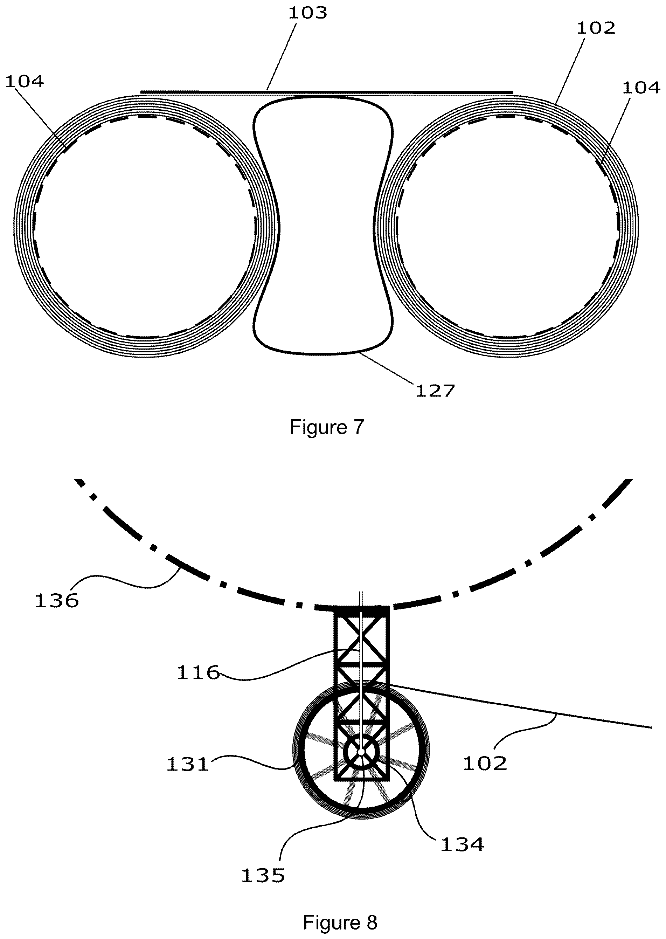

All embodiments can feature supplementary buoyancy at the aerostat bodies, or in the middle of the flat gas envelope. As illustrated in Figure 7, in dual-connected examples an additional central airship body (127) can be used to support the weight of a central tether (111), or other centrally-mounted hardware, such as solar cells (103), and may also act as a compressible buffer between the two aerostat bodies at low altitude.

In the preferred embodiment of the invention, the "Rollable Aerostat", each internally-connected aerostat body is an airship (104) with a main body which is effectively cylindrical in shape, enabling the flat gas envelope (102) to be rolled around the main body of the airship.

Each cylindrical airship (104) has high radial symmetry, and an internal structure strong enough to transfer torque from the longitudinal axis to the cylindrical surface.

As the "Rollable Aerostat" ascends, controlled rotation of each cylindrical airship (104) gradually unrolls the flat gas envelope (102), enabling lifting gas to expand into it.

As the Rollable Aerostat descends, reverse-rotation rolls the flat gas envelope (102) back around each cylindrical airship (104), squeezing the lifting gas into the gas cells inside the airship.

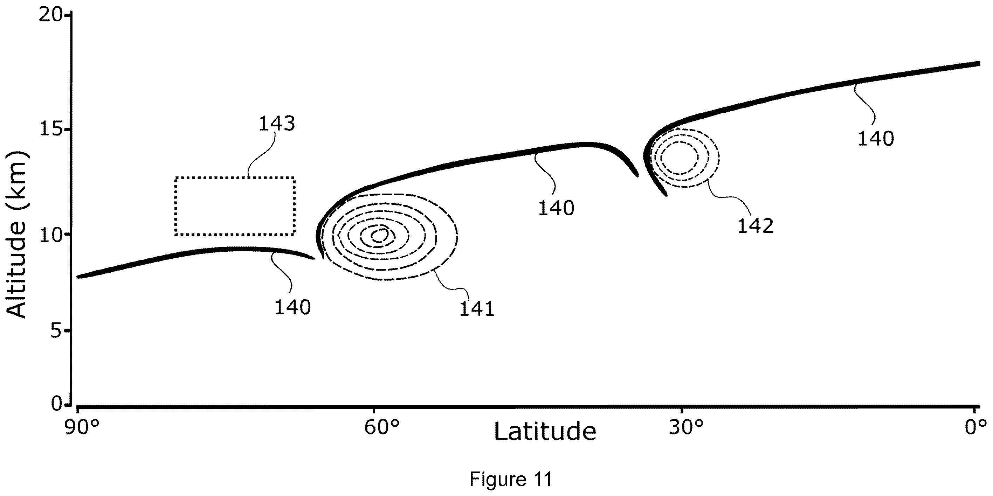

As illustrated in figure 11, the minimum altitude required to access the lower stratosphere varies between approximately 10 km near the poles to up to 20 km in the tropics. In the summer polar stratosphere, zonal winds are relatively low (NPL2), and the sun is in the sky for a high proportion of the day, albeit at a low solar altitude angle. This comprises the most practical working environment for medium duration applications of the invention.

Existing rigid airships have a ceiling well below 10 km, but advanced materials and novel designs, such as frames incorporating inflatable beams (PTL3, NPL3), make higher altitudes possible.

Rigid airships with a cylindrical main body are easier to construct than conventional ellipsoid designs (NPL1).

Conventional semi-rigid airships have a rigid keel at the base of the envelope (NPL2). Semi-rigid cylindrical airships used for the aerostat bodies, have a rigid spine along their longitudinal axis. Unlike rigid cylindrical airships, semi-rigid cylindrical airships require gas pumps, valves and control systems to maintain positive interior pressure and exterior shape. The facility to pump lifting gas, potentially enables full deployment of the flat gas envelope (102) at any altitude.

In autonomous versions of the "Rollable Aerostat", torque for the rotation is applied either by counterweights (110) suspended from the longitudinal axis of a cylindrical airship (104), or weighted railcars (117) which move along rack rails (118) around the surface (123) of a cylindrical airship.

In the alternative embodiment, the "Suspended Roller", the flat gas envelope (102) is wound around a cylindrical roller (131), which is suspended below either a conventional airship (132), or assemblies of one or more non-rigid aerostats (136).

In the Suspended Roller, the gas pipes (116) which join the gas cells inside internally-connected aerostats to the flat gas envelope, are connected via a rotary union (135) on the axis of the roller. Motors (134) rotate the roller (131) to unroll and roll the flat gas envelope (102).

In both SRM and solar-electricity applications it is desirable to maximise its interaction with incident sunlight. A key factor in this, especially at high latitudes, is the ability to angle the envelope directly towards the sun.

Some examples have the ability to move internal weights longitudinally to completely change the pitch of the airships. The flat envelope can also include small moveable weights, or use pressure variations, to passively or actively follow the pitch of the airships. When wind conditions permit, these examples can change the ptich of the flat envelope to face the sun.

Asymmetric or variable buoyancy in the aerostat bodies can be used to create a slope along the width of the flat gas envelope in order to roll the invention towards the sun. Asymmetric or variable buoyancy can also create a vertical offset between the aerostat bodies at low altitude, reducing the risk of collision.

In SRM applications, it is desirable to minimise the interaction with terrestrial longwave radiation, especially during hours of darkness. This can be achieved by presenting as small a surface area as possible to the ground.

Some examples of the invention are designed to descend and roll-up during the night. Examples with full control of pitch and position, can put the flat gas envelope (102) into a vertical position, edge-on to the prevailing wind, during hours of darkness. Some examples may alternatively concertina the flat gas envelope during the hours of darkness.

In SRM applications, the upper layer of the flat gas envelope (102) is chosen to reflect as much solar radiation as possible back to space. To maximise the net impact on the Earth's radiation the envelope materials are also selected to maximise transparency to terrestrial longwave radiation.

In SRM applications, the flat gas envelope may be relatively simple and inexpensive. To maximise the surface area delivered by the more-complex guide aerostats, the flat gas envelope can disconnect from the guide aerostats at the target altitude, and float freely in the atmosphere. The guide aerostats are then able to descend to be refilled with lifting gas, and collect another flat envelope. In this case, the flat envelope may incorporate deeper regions or supplementary buoyancy at the ends, to support the weight of small thrusters.

### Advantageous Effects of Invention

The invention maximises the surface area of an aerostat, at a target altitude, increasing it by a factor of up to 100.

The invention is relatively compact at low altitude, enabling practical handling and launching at ground level, and requiring only a relatively small footprint for storage.

The invention can deliver a very-large, radiatively-active layer, such as photovoltaic film, or a high-albedo surface, to high altitudes where sunlight is more intense, and the atmosphere is more stable.

The invention is made up of two simple and well understood components-- aerostat bodies of a relatively standard design, and a flat gas envelope with depth-constraining structures.

The autonomous version of the invention is relatively manoeuvrable at low altitudes, and can be flown to the target location, before ascending to the target altitude.

The invention can actively adjust its position, angle and shape to maximise its interaction with sunlight, and to minimise its interaction with terrestrial longwave radiation.

The invention is a practical platform for targeted Solar Radiation Management, which can accurately reduce insolation in specific locations, such as those of high climate sensitivity, conservation concern, or with human habitation challenges.

The invention is a practical platform for airborne solar energy generation, especially suited to locations where there is scarcity of suitable or affordable land area, or for sun-following energy platforms.

Deployment at higher altitudes has several benefits to solar energy generation. The intensity of solar radiation intensity is increased, because there is less atmosphere above the system to scatter or absorb solar radiation. At stratospheric altitudes, the intensity of sunlight can be three times that at ground level. Losses due to shading by clouds are virtually eliminated. The low ambient temperature also minimises thermal losses in photovoltaic cells.

### Brief Description of Drawings

The diagrams illustrate the basic components of the invention at launch, during ascent, or at the target working altitude. None of the diagrams are to scale. In particular, the relative width of the flat gas envelope is much less than in a real system.
[Fig.1a] shows a simplified plan view from above the "Rollable Aerostat" in its stowed configuration, showing the connected airships (104) with their cylindrical main body obscured by the uninflated flat gas envelope (102) wrapped around them.
[Fig.1b] shows a simplified front section view of the "Rollable Aerostat" in its stowed configuration, showing the circular cross-section of the connected airships (104), and the uninflated flat gas envelope (102) wrapped around each cylindrical main body.
[Fig.2a] shows a simplified plan view from above the "Rollable Aerostat" in its deployed configuration, showing the distanced airships (104), and the inflated and neutrally-buoyant flat gas envelope (102) extended between them.
[Fig.2b] shows a simplified front section of the "Rollable Aerostat" in its deployed configuration, showing the circular cross-section of the distanced airships (104), and the inflated and neutrally-buoyant flat gas envelope (102) extended between them.
[Fig.2c] shows a simplified section across the flat gas envelope in its deployed configuration, showing the depth constraining structures (101) and the cables (115).
[Fig.2d] shows a detailed view from above the flat gas envelope in its deployed configuration, showing the depth constraining structures (101) and the cables (115).
[Fig.3a] is a cross-section view through one connected airship (104) in a "Rollable Aerostat", showing the internal rotator, including the rotating mount (108), suspension frame (109), counterweight (110) and neutrally-buoyant flat gas envelope (102).
[Fig.3b] is a detailed view of the rotating mount, illustrating electric motors (105) turning a large gear (107) attached to the central spine (106) of the airship.
[Fig.4a] is a front-elevation view of an airship (104) in an end-tethered "Rollable Aerostat". The hemi-ellipsoidal end-cap is illustrated by concentric circles. It shows the external rotator including the rotating mount (108), suspension frame (109), and counterweight (110), and a ground tether (111) attached to the counterweight.
[Fig.4b] is a front-elevation view of a connected airship (104) in an autonomous "Rollable Aerostat" , showing a multi-directional propulsion system, including tiltable thrusters (114), power storage (112), and a powered swivel (113) joining it to the suspension frame (109) .

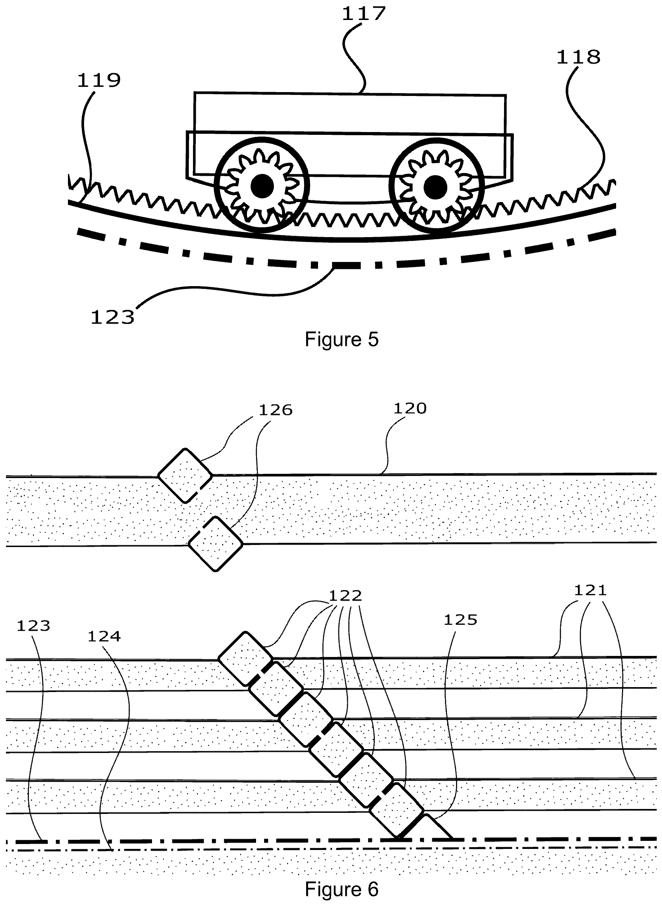

[Fig.5] shows a view of the rack rotator mechanism inside the surface of an airship (123), consisting of the circular rack (118), guide-rail (119), and railcar (117).
[Fig.6] shows a cross-section through an unrolling flat gas envelope including diamond cross-section pipes with perforated internal facets. In rolled segments of the envelope (121) the stacked pipes (122) sit on top of a fixed pipe-shape (125) attached to the surface of the airship (123). The internal facets of the stacked pipes (122) form a seal against each other. In the unrolling segment of the envelope (120), the exposed perforations in the internal facets of the parted pipes (126), enable lifting gas to flow from the gas cells inside the airship (124) into that segment of the envelope.
[Fig.7] is a simplified front section view of a "Rollable Aerostat", featuring an additional central isolated aerostat body, in its stowed configuration. It shows the uninflated flat gas envelope (102) wrapped around each connected aerostat (104), and a partially-inflated semi-rigid isolated aerostat (127), which supports the weight of solar cells (103) in the middle of the flat gas envelope.
[Fig.8] shows a close-up front section of one "Suspended Roller" in its stowed configuration. A cylindrical roller (131) is suspended below a connected aerostat (136), with the uninflated flat gas envelope (102) rolled around it. Pipes (116) connect the interior volume of the connected aerostat to the flat gas envelope via a rotary union (135) on the axis of the roller. Motors (134) rotate the roller to unroll or roll the flat gas envelope.
[Fig. 9] shows a front section view of the "Suspended Roller" embodiment in its stowed configuration. Two end bodies (136) each include one or more aerostats. The flat gas envelope (102) is wrapped around cylindrical rollers (131) suspended below the end bodies.
[Fig.10] is a side view of the "Suspended Roller" embodiment, showing one of two ellipsoid airships (132) with three rollers (130) suspended below its keel (133).
[Fig.11] Is an illustrative cross-section of the summer hemisphere showing approximate positions of the tropopause (140), polar jet or "jet stream" (141) and tropical jet (142). The dotted box (143) indicates the most accessible part of the lower stratosphere.
[Fig.12a] illustrates a "dual connection" layout with two connected aerostat end-bodies (150).
[Fig.12b] illustrates a "mono connection" layout with one connected aerostat end-body (150) and one isolated end-body (151).
[Fig.12c] illustrates a "triple connection" layout of two connected aerostat end-bodies (150), and one central connected aerostat body (150).
[Fig.12d] illustrates a "central connection" layout with one connected aerostat end-body (150) and two isolated end-bodies (151).
[Fig.12e] illustrates a "dual connection" layout with two connected aerostat end-bodies (150), and a central isolated aerostat body (151).

### Description of Embodiments

All the embodiments can be used in either an autonomous or tethered solution, may feature supplementary buoyancy, and may be applied to SRM, solar power generation, or other high-surface-area applications.

All the embodiments can be formed in a range of different layouts of internally-connected and isolated aerostats, which by way of example but not limitation include the mono-connection; dual-connection; triple connection, or central-connection layouts illustrated in figures 12a to 12e.

In the simplest embodiment, the flat envelope is not rolled on or under the connected aerostats. It may be folded at take-off and then released, or released at take-off in an open state. In smaller examples of the simplest embodiment, the isolated aerostats (151) can be left out of the layouts shown in figures 12a to 12e. In this case, gas pressure alone shapes the flat envelope.

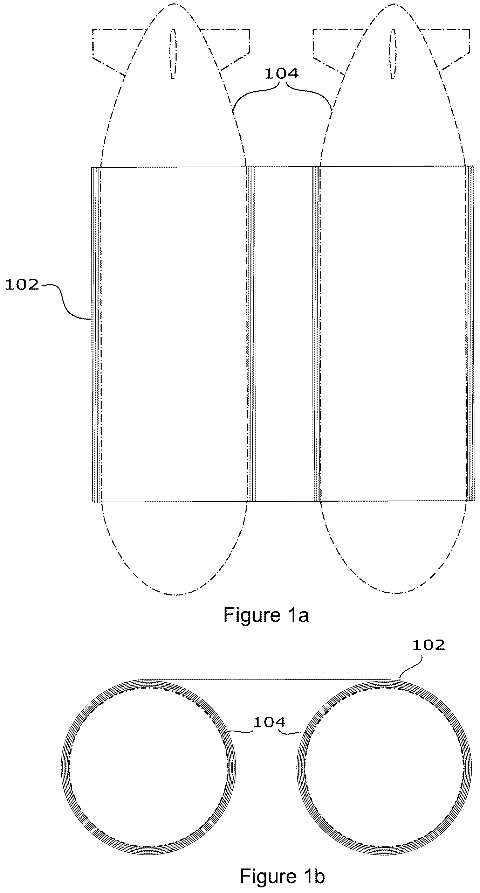

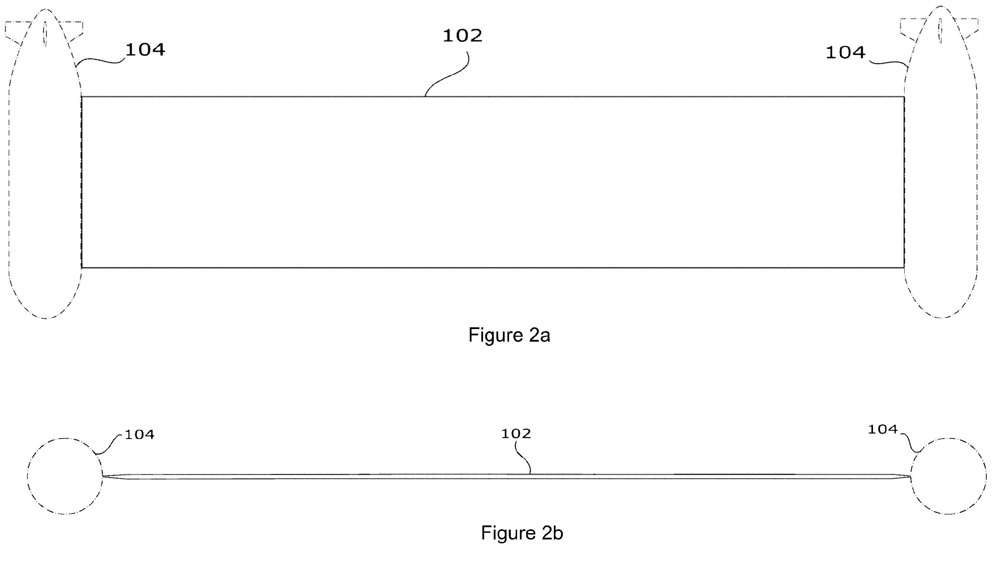

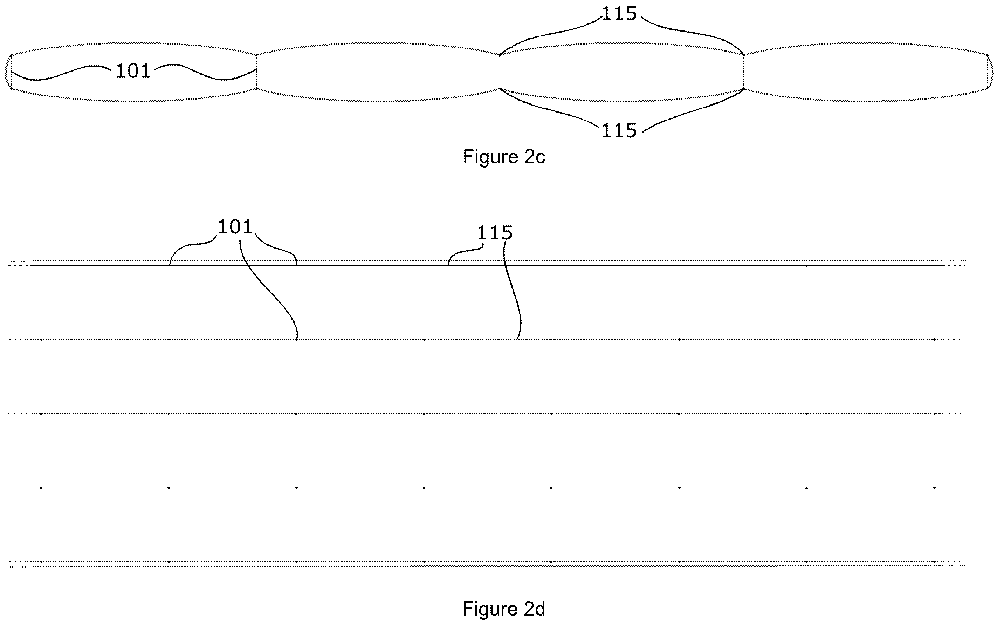

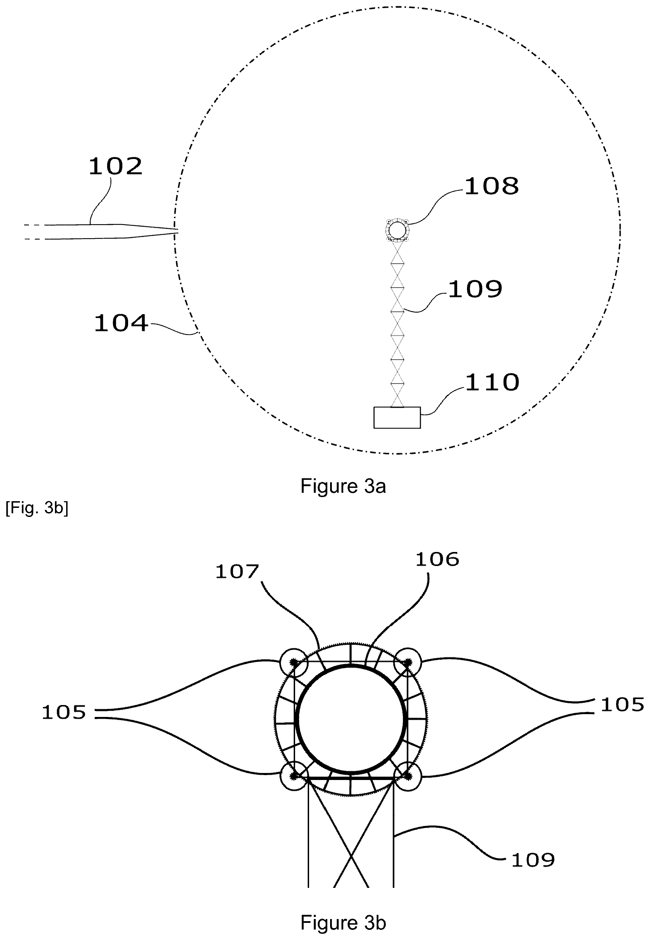

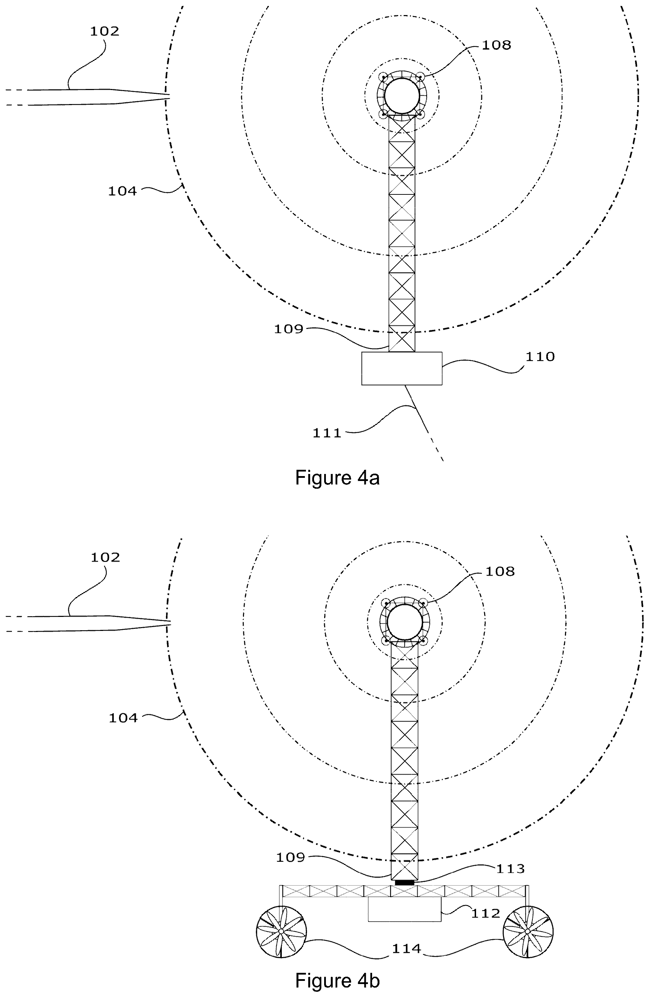

The preferred embodiment, the "Rollable Aerostat", is illustrated in Figures 1-4 in the dual-connected layout. In this embodiment the aerostat bodies are airships with a cylindrical main body (104). The cylindrical section of each internally-connected airship acts as a roller for stowing the uninflated flat gas envelope (102) at ground level, and deploying and retracting the flat gas envelope as the invention ascends and descends.

An alternative embodiment, the "Suspended Roller", is illustrated in figures 7 to 9 in the dual-connected layout. The Suspended Roller embodiment enables multi-purpose airships (132,136) of pre-existing designs, to deploy a relatively large surface. One or both ends of the flat gas envelope (102) are wound around a cylindrical roller (131), suspended below one or more aerostats.

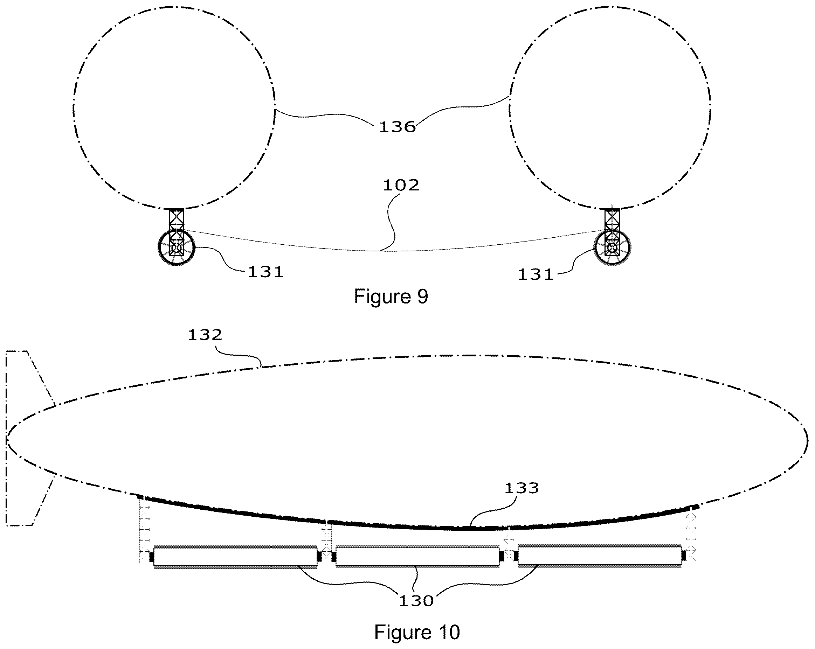

In the Suspended Roller embodiment, the interiors of the aerostat envelopes and flat gas envelope are joined by gas pipes (116), connected via a rotary union (135) on the axis of the cylindrical roller. Motors (134) rotate the cylindrical roller to unroll and roll the flat gas envelope. By way of example but not limitation, the cylindrical rollers may be suspended below balloons (figure 9), ellipsoid airships (figure 10) or "two balloon airships" (PTL4).

Unlike the Rollable Aerostat, the roller (131) in the Suspended Roller does not support its own weight. The maximum length of a Suspended Roller is limited by its bending stiffness, because significant deflection along its length inhibits rotation.

Figure 10 shows multiple Suspended Rollers suspended from the keel of a semi-rigid ellipsoid airship (132). Opposing pairs of suspended rollers (130) deploy parallel strips of flat gas envelope (102). The use of multiple in-line rollers enables the solution to scale to large airship designs, and enables modular designs.

The typical disadvantages of the suspended roller embodiment over the "Rollable Aerostat" embodiment are lower maximum altitude, reduced area of flat gas envelope, and reduced ability to orientate the surface of the flat gas envelope sunwards.

### Examples

The airship-based examples in this section illustrate a range of possible applications, which are not intended to be exhaustive.

As illustrated in figure 11, the minimum altitude required to access the lower stratosphere varies between approximately 10 km near the poles to up to 20 km in the tropics. Short duration systems can be operated at lower altitudes with suitably active management.

In the summer polar stratosphere, zonal winds are relatively low (NPL2), and the sun is in the sky for a high proportion of the day, albeit at a low solar altitude angle. This comprises the most practical working environment for medium to long duration applications.

The following information and assumptions are used in estimating the dimensions and properties of the examples in this section:
- The deadweight of an airship is approximately proportional to its surface area.
- The deadweight of rigid airships constructed with modern materials can be 50% lower than historic designs.
- The gas envelopes of an airship can occupy 90% of its internal volume.
- High albedo surfaces or coatings of areal densities less than 200 g/m² are available.
- Ultrathin photovoltaic films, optimised for the solar spectrum at high altitudes, are available at areal densities less than 200 g/m² (NPL5).
- The mean areal density of the flat gas envelope can be 500 g/m², based on
   ∘ two surfaces of flat gas envelope of 100 g/m² (NPL4)
   ∘ reinforced with carbon fibre yarns
   o connected by carbon fibre tendons
   o a radiatively-active layer of 250 g/m²
- The examples all use the dual-connection layout shown in figure 12a
- Weight of ground tethers and any high-tension electrical cables, can be supported by supplementary buoyancy.

Table 1 sets out approximate values for the key properties of various example classes (A to F) of rollable aerostats and suspended rollers, based on the above information and assumptions, and using the equation (1) and equation (2) above.

**Table 1: Example Classes of Rollable Aerostat and Suspended Roller Systems**

| **Class** | **Embodiment** | **Target Altitude** | **Aerostat Bodies (each)** | | | | **Flat Envelope** | | | **Area Expansion Ratio** |
|---|---|---|---|---|---|---|---|---|---|---|
| | | | **Description** | **Length** | **Radius*** | **Dead weight** | **Length** | **Full Width** | **Surface Area** | |
| **A** | Rollable Aerostat | 8km | Rigid cylindrical airship | 75m | 7.5m | 3.4t | 60m | 700m | 42,000m² | 20 |
| **B** | Rollable Aerostat | 16km | Rigid cylindrical airship | 240m | 20m | 30t | 200 | 5km | 1km² | 60 |
| **C** | Rollable Aerostat | 20km | Semi-rigid cylindrical airship with internal bracing | 140m | 20m | 10t | 100m | 6.5km | 650,000m² | 60 |
| **D** | Rollable Aerostat | 22km | Rigid inflatable frame cylindrical airship | 264m | 32m | 36t | 200m | 15km | 3km² | 100 |
| **E** | Suspended Roller | 15km | Two-balloon airship (PTL4) with single suspended roller | 58m | 9m | 1t | 40m | 2km | 60,000m² | 50 |
| **F** | Suspended Roller | 8km | Ellipsoid rigid airship with multiple suspended rollers | 169m | 27m | 25t | 140m | 2km | 300,000m² | 30 |

| | | | | | | | | | | |
|---|---|---|---|---|---|---|---|---|---|---|
| ** Radius refers to either the radius of the cylindrical airship body (Class A-D), the radius of balloons (Class E), or the maximum radius of an ellipsoid airship (Class F).* | | | | | | | | | | |

Example 1: Electricity Platform, based on an end-tethered Class A system. Used to generate solar electricity in locations where there is insufficient land for ground-based solar panels. Operated during daylight, and returned to ground at night, and whenever strong winds are forecast. Small and robust enough to enable regular ground handling and storage. A layer of ultrathin photovoltaic film covering 40,000m² of the flat gas envelope generates approximately 40 MWh of energy per day in midlatitudes.

Example 2: Pole Protector, based on an autonomous Class B system. This long duration system is deployed in polar regions during the summer to shade the ocean adjacent to melting sea ice. It can help preserve multi-season ice floes in areas such as the Beaufort Gyre, where approximately 3,000 systems can reduce net insolation by 1%. The system can be transported between hemispheres during equinoctal periods.

Example 3: Hydrogen Production Platform based on a Class B system. The Rollable Aerostat is tethered to a surface ship via a central airship. Electricity generated by a layer of ultrathin photovoltaic film, is transmitted to the surface ship and used to electrolyse seawater. Approximately 2,000 tons of hydrogen can be produced each month. The platform operates near each pole for 3 to 4 months during summer, and travels between hemispheres during equinoctal periods.

Example 4: Interhemispheric Pole Protector based on the Class C or Class D example system. An autonomous long-duration solar reflector which remains in the stratosphere for years at a time. It spends most of its time over the summer pole, but is able to cross the equator during equinoctal periods whilst remaining above the tropopause. Relatively safe from atmospheric disturbance, it still avoids major storms when possible, because of the risk from upper atmospheric lightning, such as the phenomenon known as a "blue jet".

Example 5: Glacier Shade, based on the Class E example system. Used to shade valley walls and debris-covered ice in the vicinity of high-latitude glaciers during summer. It can be transported in component form to a remote location, and assembled and inflated onsite. Carbon fibre composite tethers hold it in position. In mid-summer, it can reduce insolation for a low-albedo area by up to 400 megawatt-hours per day.

Example 6: "Artificial cloud" based on the Class F example system. Used to shadow a sensitive area of land or sea during daylight hours. In mid-latitudes in mid-summer, it can reduce insolation for a low-albedo area by up to 2,000 megawatt hours per day.

### Industrial Applicability

The invention can be made in the aerospace industry, and used in the energy, geoengineering or climate adaptation industries.

### Reference Signs List

The references signs used are as follows:
- 101.: Depth-constraining structures
- 102.: Flat envelope
- 103.: Solar cells
- 104.: Cylindrical airship
- 105.: Motors for rotating the cylindrical airship
- 106.: Central spine of the cylindrical airship
- 107.: Large gear
- 108.: Rotating mount
- 109.: Suspension frame
- 110.: Counterweight
- 111.: Ground tether
- 112.: Power storage
- 113.: Powered swivel
- 114.: Thruster
- 115.: Cable
- 116.: Gas pipe
- 117.: Railcar
- 118.: Rack rail
- 119.: Guide rail
- 120.: Unrolling segment of the flat gas envelope
- 121.: Rolled segment of the envelope
- 122.: Stacked perforated-pipes
- 123.: Surface of an airship
- 124.: Gas cell inside an airship
- 125.: Fixed pipe shape
- 126.: Parted perforated-pipes
- 127.: Semi-rigid aerostat body
- 130.: Suspended roller
- 131.: Cylindrical roller
- 132.: Ellipsoid airship
- 133.: Keel
- 134.: Motor for turning the cylindrical roller
- 135.: Rotary union
- 136.: General aerostat body, incorporating one or more aerostats
- 140.: Approximate positions of the tropopause
- 141.: Polar jet or "jet stream"
- 142.: Tropical jet
- 143.: Box indicating the most accessible part of the lower stratosphere
- 150.: Connected aerostat of any type
- 151.: Isolated aerostat of any type (can be optional in smaller systems)

### Citation List

### Patent Literature

PTL1: US133621015 Stratosphere tethered photovoltaic power platform
PTL2: US20200386970A1 Aerostatically Stabilized Atmospheric Reflector To Reduce Solar Irradiance
PTL3: WO2015065433A1 Rigid airship utilizing a rigid frame formed by high pressure inflated tubes
PTL4: US8061647B1 High altitude two balloon airship
PTL5: US5538203A Ballonet system for a lighter-than-air vehicle
PTL6: US20070034740 Transformable airship
PTL7: US7997532B2 Airborne power station
PTL8: US20130126675A1 Durable airship hull and in situ airship hull repair
PTL9: US8800628B2 Self-propelled airship hull repair system
PTL10: US9246433B2 Airborne Photovoltaic Solar Device And Method
PTL11: US11459080B2 Transformable Stratospheric Airship
PTL12: WO2021068457A1 Stratospheric airship of large-scale rigid and flexible integrated structure

### Non Patent Literature

NPL1: Evolution of the Rigid Airship Design, Baron L. d'Orcy, Scientific American, Vol. 115, No. 26 (December 23, 1916), p. 576, 579, 581
NPL2: Airships: A New Horizon for Science, Keck Institute for Space Studies, 2013
NPL3: Weinan et al., "A novel inflatable rings supported design and buoyancy-weight balance deformation analysis of stratosphere airships." Chinese Journal of Aeronautics, Volume 35, Issue 1, January 2022, Pages 340-347
NPL4: Vallabh et al. "Ultra-lightweight fiber-reinforced envelope material for a high-altitude airship." The Journal of The Textile Institute (2021): 1-7.
NPL5: Papež et al, "Overview of the Current State of Gallium Arsenide-Based Solar Cells". Materials 2021,14,3075.

## Claims

1. A variable volume aerostat which can expand its surface area, comprising:
one or more strips each forming a flat gas envelope (102) for containing a lifting gas, made of a lightweight material which is impervious to the lifting gas;
depth-constraining structures (101) which constrain the depth of each flat gas envelope (102);
aerostat bodies (104), being airships or balloons, joined to each flat gas envelope (102);
openings or pipes (116,122) which enable the lifting gas to flow between gas cells inside the aerostat bodies (104) and an interior of each flat gas envelope (102);
wherein, in a stowed configuration, each flat gas envelope (102) is uninflated, and the gas cells inside the aerostat bodies (104) contain all of the lifting gas; and wherein, in a deployed configuration, the lifting gas fills each flat gas envelope (102), wherein the one or more flat gas envelopes are fully extended and self-supporting, and present an area to the Sun larger than the area presented to the Sun by the aerostat bodies (104).

2. A variable volume aerostat according to claim 1, wherein the flat gas envelope(s) (102) are strengthened by lightweight fibres woven into the envelope material, or by strong lightweight cables attached to the flat gas envelope(s) (102) at intervals.

3. A variable volume aerostat according to claim 1 further comprising lightweight pipes along the width of each flat gas envelope (102), wherein the flow of lifting gas between each flat gas envelope (102) and the gas cells inside the aerostat bodies (104) is expedited, the aerostat further comprising:
division of said flat gas envelope(s) (102) into separate sections along their width(s);
a series of active or passive valves in said pipes (116,122) which control the flow of lifting gas between the gas cells in the aerostat bodies (104) and the separate sections of said flat gas envelope(s) (102);
wherein during ascent, lifting gas expanding from the gas cells in said aerostat bodies (104) is directed into the separate sections of said flat gas envelope(s) (102) that are being unrolled or unfolded; and
wherein during descent, lifting gas is directed out of the separate sections of said flat gas envelope(s) (102), that are being rolled or folded, into the gas cells inside said aerostat bodies (104).

4. A variable volume aerostat according to claim 1, comprising:
a cylindrical structure at one or either end of said flat gas envelope(s) (104), which is able to rotate along a longitudinal axis and act as a roller; non-rotating external attachment points, joined to the ends of the longitudinal axis of said roller or rollers via rotating mounts;
wherein the uninflated flat gas envelope(s) (102) can be rolled onto said roller or rollers before the aerostat ascends;
wherein the flat gas envelope(s) (102) can be unrolled from said roller or rollers, and be inflated with the lifting gas as the aerostat ascends;
wherein the deflating flat gas envelope(s) (102) can be rolled back onto said roller or rollers as the aerostat descends; and
wherein tethers, propulsion systems, supplemental buoyancy, or other non-rotating structures, can be attached to said roller or rollers at the non-rotating external attachment points on the longitudinal axis.

5. A variable volume aerostat according to claim 4, wherein:
the aerostat bodies (104) are said rollers, each being formed of a rotatable airship which has a main body in a shape of a cylinder;
wherein in the stowed configuration, said flat gas envelope(s) (102) are uninflated, and rolled around the rotatable airship or airships;
as the aerostat ascends, said flat gas envelope(s) (102) are unrolled by controlled rotation of the rotatable airship(s), and inflates with the lifting gas expanding from the gas cells inside the rotatable airships;
in the deployed configuration, said flat gas envelope(s) (102) are fully unrolled, and have been filled with sufficient lifting gas to make it neutrally buoyant; and
as the aerostat descends, said flat gas envelope(s) (102) are rolled around the rotatable airship(s) during controlled rotation, pushing the lifting gas back into the gas cells inside the rotatable airships.

6. A variable volume aerostat according to claim 5, additionally comprising:
an external rotator, suspended below said external attachment points, respectively;
energy storage or another mass mounted on the external rotator at a distance from the longitudinal axis of said rotatable airships;
motors, gears and control mechanisms attached to said rotating mounts, respectively; and an onboard control system;
wherein an off-axis weight of the external rotator provides a restoring torque; and
wherein an off-axis buoyancy of any supplementary buoyancy provides a restoring torque; and
wherein a torque applied through each rotating mount, rotates said rotatable airships.

7. A variable volume aerostat according to claim 6, further comprising:
one or more internal rotators, suspended along the longitudinal axis in the interior of said rotatable airships via a rotating mount;
energy storage or other mass mounted on the internal rotator(s) at a distance from the longitudinal axis of the rotatable airships;
motors, gears and control mechanisms attached to each rotating mount;
wherein a torque applied through each rotating mount, rotates said rotatable airships, in reaction to the restoring torque provided by the off axis weight; and
wherein the combined weight of the internal rotators and said external rotators, is more evenly distributed along the length of said rotatable airships; and
wherein said rotatable airships can be rotated, without having to overcome deflection along its longitudinal axis, caused by uneven weight distribution.

8. A variable volume aerostat according to claim 4, additionally comprising structures which suspend said rollers below said aerostat bodies; rotating joints, which consist of rotary unions, connecting said pipes from the aerostat bodies to said flat gas envelope(s) at
the longitudinal axis of said rollers;
motors and control systems for rotating said rollers;
wherein the flat gas envelope(s) (102) can be unrolled or rolled by rotating said rollers; and
wherein the lifting gas can move between the gas cells inside the aerostat bodies (104) and the flat gas envelope envelope(s) (102).

9. A variable volume aerostat according to claim 1, additionally comprising a multi-directional propulsion system, including thrusters (114), energy storage and a control system, attached to said aerostat bodies (104), wherein:
the relative position of said aerostat bodies (104) can be accurately controlled;
the aerostat can change its orientation, position and speed; and
a lateral stretching force can be exerted along the width of said flat gas envelope(s) (102), by using the multi-directional propulsion system to separate said aerostat bodies (104).

10. A variable volume aerostat according claim 1, additionally comprising one or more lightweight tethers for attaching the aerostat to winches on the Earth's surface, or for mounting to a lower altitude vehicle, wherein the aerostat can ascend to high altitude whilst its geographic position is controlled by the force exerted through the tethers.

11. A variable volume aerostat according to claim 4, additionally comprising lightweight tethers attached to said non-rotating external attachment points, configured to be attached to winches separated by more than the full width of said flat gas envelope(s), and motors and a control system which control the rotation of the roller(s), wherein:
in the stowed configuration said tethers are withdrawn, most of said flat gas envelope(s) (102) are rolled, and rotation of the roller(s) is locked wherein during deployment, said tethers are steadily unwound, allowing the aerostat to ascend;
as the aerostat ascends, the force exerted by the tethers is allowed to steadily rotate said rollers whilst maintaining tension in said flat gas envelope(s) (102), unrolling said flat gas envelope, which fills with the lifting gas; and
in the deployed configuration, the force exerted by the tethers continues to maintain the position of the aerostat and the tension in said flat gas envelope(s) (102).

12. A variable volume aerostat according to claim 1, further comprising an additional central airship (127) attached near the middle of said flat gas envelope(s) (102), wherein:
additional weight near the middle of said flat gas envelope(s) (102) can be supported by the buoyancy of the central airship (127);
the central airship (127) can be used as an attachment point for tethers or cables connecting the aerostat to the ground or a lower altitude craft; and
if of a non-rigid type, the central airship (127) can act as a physical buffer between two of said aerostat bodies (104) at the ends of said flat gas envelope(s) (102).

13. A variable volume aerostat according to claim 1, wherein said flat gas envelope(s) (102) have a top layer or coating of high albedo, wherein a high proportion of incident solar radiation is reflected back into space, wherein during hours of daylight, there is a net cooling the area on the Earth's surface that is shadowed by the aerostat.

14. A variable volume aerostat according to claim 1, wherein in the deployed configuration, said flat gas envelope(s) (102) can be disconnected from said aerostat bodies (104), to float freely in the atmosphere.

15. A variable volume aerostat according to claim 1, additional comprising:
a layer of ultrathin photovoltaic film (103) on a top surface of said flat gas envelope(s) (102);
connecting conductors;
electricity control systems; and
electricity storage and/or transmission systems;
wherein during the hours of daylight, amounts of incident solar radiation is converted into electricity.

## Patentansprüche

1. Aerostat mit variablem Volumen, der seinen Oberflächenbereich ausdehnen kann, umfassend:
einen oder mehrere Streifen, die jeweils eine flache Gashülle (102) zum Enthalten eines Traggas bilden, aus einem leichten Material hergestellt, das für das Traggas undurchlässig ist;
tiefeneinschränkende Strukturen (101), die die Tiefe jeder flachen Gashülle (102) einschränken;
Aerostatkörper (104), die Luftschiffe oder Ballons sind, an jede flache Gashülle (102) angefügt;
Öffnungen oder Rohre (116, 122), die ermöglichen, dass das Traggas zwischen Gaszellen im Inneren der Aerostatkörper (104) und einem Innenraum jeder flachen Gashülle (102) strömt;
wobei jede flache Gashülle (102) in einer verstauten Konfiguration nicht inflatiert ist und die Gaszellen im Inneren der Aerostatkörper (104) das gesamte Traggas enthalten; und wobei das Traggas in einer ausgelösten Konfiguration jede flache Gashülle (102) füllt, wobei die eine oder die mehreren flachen Gashüllen vollständig ausgeweitet und selbsttragend sind und der Sonne eine Fläche präsentieren, die größer als die Fläche ist, die der Sonne durch die Aerostatkörper (104) präsentiert wird.

2. Aerostat mit variablem Volumen nach Anspruch 1, wobei die flache(n) Gashülle(n) (102) durch leichte Fasern, die in das Hüllenmaterial eingewoben sind, oder durch leichte Kabel, die an die flache(n) Gashülle(n) (102) in Abständen angebracht sind, verstärkt werden.

3. Aerostat mit variablem Volumen nach Anspruch 1, ferner umfassend leichte Rohre entlang der Breite jeder flachen Gashülle (102), wobei die Strömung von Traggas zwischen jeder flachen Gashülle (102) und den Gaszellen im Inneren der Aerostatkörper (104) vorangetrieben wird, wobei der Aerostat ferner umfasst:
eine Unterteilung der flachen Gashülle(n) (102) in separate Abschnitte entlang ihrer Breite(n);
eine Reihe von aktiven oder passiven Ventilen in den Rohren (116, 122), die die Strömung von Traggas zwischen den Gaszellen in den Aerostatkörpern (104) und den separaten Abschnitten der flachen Gashülle(n) (102) steuern;
wobei Traggas, das sich aus den Gaszellen in den Aerostatkörpern (104) ausdehnt, während eines Aufstiegs in die separaten Abschnitte des (der) flachen Gashülle(n) (102) geleitet wird, die ausgerollt oder entfaltet werden; und
wobei Traggas während eines Absinkens aus den separaten Abschnitten der flache(n) Gashülle(n) (102) heraus, die aufgerollt oder gefaltet werden, in die Gaszellen im Inneren der Aerostatkörper (104) geleitet wird.

4. Aerostat mit variablem Volumen nach Anspruch 1, umfassend:
eine zylindrische Struktur an einem oder beiden Enden der flachen Gashülle(n) (104), die dazu in der Lage ist, sich entlang einer Längsachse zu drehen und als eine Rolle zu fungieren;
sich nicht drehende externe Anbringungspunkte, die mittels sich drehenden Halterungen an den Enden der Längsachse der Walze oder Walzen angefügt sind;
wobei die nicht inflatierte(n) flache(n) Gashülle(n) (102) auf der Rolle oder den Rollen gerollt werden können, bevor der Aerostat aufsteigt;
wobei die flache(n) Gashülle(n) (102) von der Rolle oder den Rollen ausgerollt und mit dem Traggas inflatiert werden können, wenn der Aerostat aufsteigt;
wobei die deflatierende(n) flache(n) Gashülle(n) (102) zurück auf die Rolle oder die Rollen aufgerollt werden können, wenn der Aerostat absinkt; und
wobei Haltegurte, Antriebssysteme, zusätzliche Auftriebskörper oder andere sich nicht drehende Strukturen an der Rolle oder den Rollen an den sich nicht drehenden externen Anbringungspunkten auf der Längsachse angebracht werden können.

5. Aerostat mit variablem Volumen nach Anspruch 4, wobei:
die Aerostatkörper (104) die Rollen sind, wobei jeder von einem drehbaren Luftschiff gebildet wird, das einen Hauptkörper in einer Form eines Zylinders aufweist;
wobei die flache(n) Gashülle(n) (102) in der gestauten Konfiguration nicht inflatiert und um das drehbare Luftschiff oder die drehbaren Luftschiffe gerollt sind;
wenn der Aerostat aufsteigt, die flache(n) Gashülle(n) (102) durch eine gesteuerte Drehung des (der) drehbaren Luftschiff(s) ausgerollt werden und sich mit dem Traggas inflatiert, das sich aus den Gaszellen im Inneren der drehbaren Luftschiffe ausdehnt;
die flache(n) Gashülle(n) (102) in der ausgelösten Konfiguration vollständig ausgerollt sind und mit genug Traggas gefüllt wurden, um sie neutral auftreibend zu machen; und
wenn der Aerostat absinkt, die flache(n) Gashülle(n) (102) während einer gesteuerten Drehung um das (die) drehbare(n) Luftschiff(e) gerollt werden, wodurch das Traggas zurück in die Gaszellen im Inneren der drehbaren Luftschiffe gedrückt wird.

6. Aerostat mit variablem Volumen nach Anspruch 5, zusätzlich umfassend:
eine externe Dreheinrichtung, die jeweils unter den externen Anbringungspunkten aufgehängt ist;
Energiespeicher oder eine andere Masse, die an der externen Dreheinrichtung in einem Abstand von der Längsachse der drehbaren Luftschiffe montiert ist;
Motoren, Getriebe und Steuermechanismen, die jeweils an den sich drehenden Halterungen angebracht sind;
und ein Bordsteuersystem;
wobei ein achsenverschobenes Gewicht der externen Dreheinrichtung ein Rückstellmoment bereitstellt; und
wobei ein achsenverschobener Auftriebskörper eines beliebigen zusätzlichen Auftriebskörpers ein Rückstellmoment bereitstellt; und
wobei ein Moment, das durch jede sich drehende Halterung angewendet wird, die drehbaren Luftschiffe dreht.

7. Aerostat mit variablem Volumen nach Anspruch 6, ferner umfassend:
eine oder mehrere interne Dreheinrichtungen, die mittels einer drehbaren Halterung entlang der Längsachse in dem Innenraum der drehbaren Luftschiffe aufgehängt sind;
Energiespeicher oder eine andere Masse, die an der (den) interne(n) Dreheinrichtung(en) in einem Abstand von der Längsachse der drehbaren Luftschiffe montiert ist;
Motoren, Getriebe und Steuermechanismen, die an jeder sich drehenden Halterung angebracht sind;
wobei ein Moment, das durch jede sich drehende Halterung angewendet wird, die drehbaren Luftschiffe dreht, als Reaktion auf das Rückstellmoment, das von dem achsenverschobenen Gewicht bereitgestellt wird; und
wobei das kombinierte Gewicht der internen Dreheinrichtungen und der externen Dreheinrichtungen gleichmäßiger entlang der Länge der drehbaren Luftschiffe verteilt wird; und
wobei die drehbaren Luftschiffe gedreht werden können, ohne dass eine Ablenkung entlang ihrer Längsachse überwunden werden muss, die von einer ungleichmäßigen Gewichtsverteilung verursacht wird.

8. Aerostat mit variablem Volumen nach Anspruch 4, zusätzlich umfassend Strukturen, die die Rollen unter den Aerostatkörpern aufhängen;
sich drehende Gelenke, die aus Drehverbindungen bestehen, die die Rohre von den Aerostatkörpern mit der (den) flachen Gashülle(n) an der Längsachse der Rollen verbinden;
Motoren und Steuersysteme zum Drehen der Rollen;
wobei die flache(n) Gashülle(n) (102) durch Drehen der Rollen ausgerollt oder gerollt werden können; und
wobei sich das Traggas zwischen den Gaszellen im Inneren der Aerostatkörper (104) und der (den) flachen Gashüllenhülle(n) (102) bewegen kann.

9. Aerostat mit variablem Volumen nach Anspruch 1, zusätzlich umfassend ein multidirektionales Antriebssystem, einschließend Triebwerke (114), Energiespeicher und ein Steuersystem, an den Aerostatkörpern (104) angebracht, wobei:
die relative Position der Aerostatkörper (104) genau gesteuert werden kann;
der Aerostat seine Ausrichtung, Position und Geschwindigkeit ändern kann; und
eine laterale Dehnkraft entlang der Breite der flachen Gashülle(n) (102) ausgeübt werden kann, indem das multidirektionale Antriebssystem verwendet wird, um die Aerostatkörper (104) zu trennen.

10. Aerostat mit variablem Volumen nach Anspruch 1, zusätzlich umfassend einen oder mehrere leichte Haltegurte zum Anbringen des Aerostats an Winden auf der Oberfläche der Erde oder zum Montieren an einem Fahrzeug auf einer niedrigeren Höhenlage, wobei der Aerostat zu einer hohen Höhenlage aufsteigen kann, während seine geografische Position durch die Kraft gesteuert wird, die durch die Haltegurte ausgeübt wird.

11. Aerostat mit variablem Volumen nach Anspruch 4, zusätzlich umfassend leichte Haltegurte, die an den sich nicht drehenden externen Anbringungspunkten angebracht sind, die dazu konfiguriert sind, an Winden angebracht zu werden, die um mehr als die volle Breite der flachen Gashülle(n) getrennt sind, und Motoren und ein Steuersystem, die die Drehung der Rolle(n) steuern, wobei:
die Haltegurte in der verstauten Konfiguration zurückgezogen sind, der Großteil der flachen Gashülle(n) (102) gerollt sind und eine Drehung der Rolle(n) blockiert ist, wobei die Haltegurte während einer Auslösung stetig abgewickelt werden, was dem Aerostat ermöglicht, aufzusteigen;
wenn der Aerostat aufsteigt, wird zugelassen, dass die durch die Haltegurte ausgeübte Kraft die Rollen stetig dreht, während eine Spannung in der (den) flachen Gashülle(n) (102) aufrechterhalten wird, Ausrollen der flachen Gashülle, die sich mit dem Traggas füllt; und
die durch die Haltegurte ausgeübte Kraft in der ausgelösten Konfiguration fortfährt, um die Position des Aerostats und die Spannung in der (den) flachen Gashülle(n) (102) aufrechtzuerhalten.

12. Aerostat mit variablem Volumen nach Anspruch 1, ferner umfassend ein zusätzliches zentrales Luftschiff (127), das nahe der Mitte der flachen Gashülle(n) (102) angebracht ist, wobei:
zusätzliches Gewicht nahe der Mitte der flachen Gashülle(n) (102) von dem Auftriebskörper des zentralen Luftschiffs (127) getragen werden kann;
das zentrale Luftschiff (127) als ein Anbringungspunkt für Haltegurte oder Kabel verwendet werden kann, die den Aerostat mit dem Erdboden oder einem Schiff auf einer niedrigeren Höhenlage verbinden; und
wenn es von einem nichtstarren Typ ist, das zentrale Luftschiff (127) als ein physischer Puffer zwischen zwei der Aerostatkörper (104) an den Enden der flachen Gashülle(n) (102) fungieren kann.

13. Aerostat mit variablem Volumen nach Anspruch 1, wobei die flache(n) Gashülle(n) (102) eine obere Schicht oder Beschichtung mit hoher Albedo aufweisen, wobei ein hoher Anteil von einfallender Sonnenstrahlung zurück in den Weltraum reflektiert wird, wobei während Sonnenstunden ein Netz vorliegt, das die Fläche auf der Oberfläche der Erde kühlt, die von dem Aerostat verschattet wird.

14. Aerostat mit variablem Volumen nach Anspruch 1, wobei die flache(n) Gashülle(n) (102) in der ausgelösten Konfiguration Von den Aerostatkörpern (104) getrennt werden können, um frei in der Atmosphäre zu schweben.

15. Aerostat mit variablem Volumen nach Anspruch 1, zusätzlich umfassend:
eine Schicht aus ultradünner photovoltaischer Folie (103) auf einer oberen Oberfläche der flachen Gashülle(n) (102);
Verbindungsleiter;
Stromsteuersysteme; und
Stromspeicher- und/oder -übertragungssysteme;
wobei Mengen von einfallender Sonnenstrahlung während Sonnenstunden in Strom umgewandelt werden.

## Revendications

1. Aérostat à volume variable qui peut dilater sa surface, comprenant :
une ou plusieurs bande(s) chacune formant une enveloppe à gaz plate (102) pour contenir un gaz de levage, constituée(s) d'un matériau léger qui est imperméable au gaz de levage ;
des structures de limitation de profondeur (101) qui limitent la profondeur de chaque enveloppe à gaz plate (102) ;
des corps d'aérostat (104), sous forme de dirigeables ou de ballons, joints à chaque enveloppe à gaz plate (102) ;
des ouvertures ou des conduites (116, 122) qui permettent au gaz de levage de s'écouler entre des cellules de gaz à l'intérieur des corps d'aérostat (104) et un intérieur de chaque enveloppe à gaz plate (102) ;
dans lequel, dans une configuration escamotée, chaque enveloppe à gaz plate (102) est non-gonflée, et les cellules de gaz à l'intérieur des corps d'aérostat (104) contiennent la totalité du gaz de levage ; et dans lequel, dans une configuration déployée, le gaz de levage remplit chaque enveloppe à gaz plate (102), dans lequel l'enveloppe ou les enveloppes à gaz plate(s) est/sont complètement étirée(s) et autoportante(s), et présente/présentent une aire face au Soleil plus grande que l'aire présentée face au Soleil par les corps d'aérostat (104).

2. Aérostat à volume variable selon la revendication 1, l'enveloppe ou les enveloppes à gaz plate(s) (102) sont renforcée(s)
avec des fibres légères tissées dans le matériau d'enveloppe, ou
avec des câbles légers forts fixés à l'enveloppe ou aux enveloppes à gaz plate(s) (102) à des intervalles.

3. Aérostat à volume variable selon la revendication 1, comprenant en outre des conduites légères le long de la largeur de chaque enveloppe à gaz plate (102), dans lequel l'écoulement de gaz de levage entre chaque enveloppe à gaz plate (102) et les cellules de gaz à l'intérieur des corps d'aérostat (104) est accéléré, l'aérostat comprenant en outre :
une division de ladite ou desdites enveloppe(s) à gaz plate(s) (102) en sections séparées le long de sa ou de leur largeur(s) ;
une série de vannes actives ou passives dans lesdits conduites (116, 122) qui commandent l'écoulement de gaz de levage entre les cellules de gaz dans les corps d'aérostat (104) et les sections séparées de ladite ou desdites enveloppe(s) à gaz plate(s) (102) ;
dans lequel, pendant la montée, le gaz de levage se dilatant à partir des cellules de gaz dans desdits corps d'aérostat (104) est dirigé dans les sections séparées de ladite ou desdites enveloppe(s) à gaz plate(s) (102) qui est/sont déroulée(s) ou dépliée(s) ; et
dans lequel, pendant la descente, le gaz de levage est dirigé hors des sections séparées de ladite ou desdites enveloppe(s) à gaz plate(s) (102) qui est/sont enroulée(s) ou pliée(s), dans les cellules de gaz à l'intérieur desdits corps d'aérostat (104).

4. Aérostat à volume variable selon la revendication 1, comprenant :
une structure cylindrique au niveau de l'une ou l'autre des extrémités de ladite ou desdites enveloppe(s) à gaz plate(s) (104), qui peut tourner le long d'un axe longitudinal et agir en tant que rouleau ;
des points de fixation extérieurs non-rotatifs, joints aux extrémités de l'axe longitudinal dudit ou desdits rouleau(x) via des fixations rotatives ;
dans lequel l'enveloppe ou les enveloppes à gaz plate(s) (102) non-gonflée(s) peut/peuvent être enroulée(s) sur ledit ou lesdits rouleau(x) avant que l'aérostat ne monte ;
dans lequel l'enveloppe ou les enveloppes à gaz plate(s) (102) peut/peuvent être déroulée(s) dudit ou desdits rouleau(x), et être gonflée(s) avec le gaz de levage au fur et à mesure que l'aérostat monte ;
dans lequel l'enveloppe ou les enveloppes à gaz plate(s) (102) en cours de dégonflage peut/peuvent être enroulée(s) à nouveau sur ledit ou lesdits rouleau(x) au fur et à mesure que l'aérostat descend ; et
dans lequel des attaches, des systèmes de propulsion, une flottabilité supplémentaire, ou d'autres structures non-rotatives, peuvent être fixés au dit ou auxdits rouleau(x) au niveau des points de fixation extérieurs non-rotatifs sur l'axe longitudinal.

5. Aérostat à volume variable selon la revendication 4, dans lequel :
les corps d'aérostat (104) sont lesdits rouleaux, chacun étant formé d'un dirigeable rotatif qui présente un corps principal en forme de cylindre ;
dans lequel, dans la configuration escamotée, ladite ou lesdites enveloppe(s) à gaz plate(s) (102) est/sont non-gonflée(s), et enroulée(s) autour du dirigeable rotatif ou des dirigeables ;
au fur et à mesure que l'aérostat monte, ladite ou lesdites enveloppe(s) à gaz plate(s) (102) est/sont déroulée(s) par rotation contrôlée du ou des dirigeable(s) rotatif(s), et se gonfle avec le gaz de levage se dilatant à partir des cellules de gaz à l'intérieur des dirigeables rotatifs ;
dans la configuration déployée, ladite ou lesdites enveloppe(s) à gaz plate(s) (102) est/sont complètement déroulée(s), et a/ont été remplie(s) avec assez de gaz de levage pour la rendre ou les rendre flottante(s) de manière neutre ; et
au fur et à mesure que l'aérostat descend, ladite ou lesdites enveloppe(s) à gaz plate(s) (102) est/sont enroulée(s) autour du ou des dirigeable(s) rotatif(s) pendant une rotation contrôlée, repoussant le gaz de levage dans les cellules de gaz à l'intérieur des dirigeables rotatifs.

6. Aérostat à volume variable selon la revendication 5, comprenant en outre :
un rotateur extérieur, suspendu au-dessous desdits points de fixation extérieurs, respectivement ;
un stockage d'énergie ou une autre masse monté(e) sur le rotateur extérieur à une distance de l'axe longitudinal desdits dirigeables rotatifs ;
des moteurs, des engrenages et des mécanismes de commande fixés auxdites fixations rotatives, respectivement ; et
un système de commande embarqué ;
dans lequel un poids désaxé du rotateur extérieur fournit un couple de récupération ; et
dans lequel une flottabilité désaxée de toute flottabilité supplémentaire fournit un couple de récupération ; et
dans lequel un couple appliqué à travers chaque fixation rotative, fait tourner lesdits dirigeables rotatifs.

7. Aérostat à volume variable selon la revendication 6, comprenant en outre :
un ou plusieurs rotateur(s) intérieur(s), suspendu(s) le long de l'axe longitudinal à l'intérieur desdits dirigeables rotatifs via une fixation rotative ;
un stockage d'énergie ou une autre masse monté(e) sur les rotateur(s) intérieur(s), à une distance de l'axe longitudinal des dirigeables rotatifs ;
des moteurs, des engrenages et des mécanismes de commande fixés à chaque fixation rotative ;
dans lequel un couple appliqué à travers chaque fixation rotative, fait tourner lesdits dirigeables rotatifs, en réaction au couple de récupération fourni par le poids désaxé ; et
dans lequel le poids combiné des rotateurs intérieurs et desdits rotateurs extérieurs, est réparti de manière plus uniforme le long de la longueur desdits dirigeables rotatifs ; et
dans lequel lesdits dirigeables rotatifs peuvent être mis en rotation, sans avoir à surmonter la déformation le long de son axe longitudinal, provoquée par une distribution de poids irrégulière.

8. Aérostat à volume variable selon la revendication 4, comprenant en outre des structures qui suspendent lesdits rouleaux au-dessous desdits corps d'aérostat ;
des joints rotatifs, qui sont constitués d'unions rotatifs, reliant lesdits conduites à partir des corps d'aérostat jusqu'à ladite ou auxdites enveloppe(s) à gaz plate(s), au niveau de l'axe longitudinal desdits rouleaux ;
des moteurs et des systèmes de commande pour faire tourner lesdits rouleaux ;
dans lequel l'enveloppe ou les enveloppes à gaz plate(s) (102) peut/peuvent être déroulée(s) ou enroulée(s) en faisant tourner lesdits rouleaux ; et
dans lequel le gaz de levage peut se déplacer entre les cellules de gaz à l'intérieur des corps d'aérostat (104) et l'enveloppe ou les enveloppes à gaz plate(s) (102).

9. Aérostat à volume variable selon la revendication 1, comprenant en outre un système de propulsion multidirectionnel, comportant des propulseurs (114), un stockage d'énergie et un système de commande, fixés auxdits corps d'aérostat (104), dans lequel :
la position relative desdits corps d'aérostat (104) peut être commandée avec précision ;
l'aérostat peut changer son orientation, sa position et sa vitesse ; et
une force d'étirement latérale peut être exercée le long de la largeur de ladite ou desdites enveloppe(s) à gaz plate(s) (102), en utilisant le système de propulsion multidirectionnel pour séparer lesdits corps d'aérostat (104).

10. Aérostat à volume variable selon la revendication 1, comprenant en outre une ou plusieurs attache(s) légère(s) pour la fixation de l'aérostat à des treuils sur la surface de la Terre, ou pour le montage sur un véhicule d'altitude inférieure, dans lequel l'aérostat peut monter à haute altitude tandis que sa position géographique est commandée par la force exercée à travers les attaches.

11. Aérostat à volume variable selon la revendication 4, comprenant en outre des attaches légères fixées auxdits points de fixation externes non-rotatifs, configurées pour être fixées à des treuils séparés de plus de la largeur totale de ladite ou desdites enveloppe(s) à gaz plate(s), et des moteurs et un système de commande qui commande la rotation du ou des rouleau(x), dans lequel :
dans la configuration escamotée, lesdites attaches sont retirées, la majeure partie de ladite ou desdites enveloppe(s) à gaz plate(s) (102) est enroulée, et la rotation du ou des rouleau(x) est verrouillée, dans lequel
pendant le déploiement, lesdites attaches sont déroulées de manière régulière, permettant à l'aérostat de monter ;
au fur et à mesure que l'aérostat monte, la force exercée par les attaches est autorisée à faire tourner lesdits rouleaux de manière régulière tout en maintenant une tension dans ladite ou lesdites enveloppe(s) à gaz plate(s) (102), déroulant ladite enveloppe à gaz plate, qui se remplit de gaz de levage ; et
dans la configuration déployée, la force exercée par les attaches continue à maintenir la position de l'aérostat et la tension dans ladite ou lesdites enveloppe(s) à gaz plate(s) (102).

12. Aérostat à volume variable selon la revendication 1, comprenant en outre un dirigeable central (127) supplémentaire fixé près du milieu de ladite ou desdites enveloppe(s) à gaz plate(s) (102), dans lequel :
un poids supplémentaire près du milieu de ladite ou desdites enveloppe(s) à gaz plate(s) (102) peut être soutenu par la flottabilité du dirigeable central (127) ;
le dirigeable central (127) peut être utilisé en tant que point de fixation pour des attaches ou des câbles reliant l'aérostat au sol ou à un engin d'altitude inférieure ; et
s'il est d'un type non-rigide, le dirigeable central (127) peut agir en tant que tampon physique entre deux desdits corps d'aérostat (104) au niveau des extrémités de ladite ou desdites enveloppe(s) à gaz plate(s) (102).

13. Aérostat à volume variable selon la revendication 1, dans lequel ladite ou lesdites enveloppe(s) à gaz plate(s) (102) présente/présentent une couche ou revêtement supérieur(e) d'albédo élevé, dans lequel une proportion élevée de rayonnement solaire incident est réfléchie vers l'espace, dans lequel, pendant les heures de la lumière du jour, il y a un refroidissement net de la zone sur la surface de la Terre qui est ombrée par l'aérostat.

14. Aérostat à volume variable selon la revendication 1, dans lequel, dans la configuration déployée, ladite ou lesdites enveloppe(s) à gaz plate(s) (102) peut/peuvent être déconnectée(s) desdits corps d'aérostat (104), pour flotter librement dans l'atmosphère.

15. Aérostat à volume variable selon la revendication 1, comprenant en outre :
une couche de film photovoltaïque ultramince (103) sur une surface supérieure de ladite ou desdites enveloppe(s) à gaz plate(s) (102) ;
des conducteurs de connexion ;
des systèmes de commande d'électricité ; et
des systèmes de stockage et/ou de transmission d'électricité ;
dans lequel, pendant les heures de la lumière du jour, des quantités de rayonnement solaire incident sont converties en électricité.
